# EUROPEAN PATENT SPECIFICATION

(11) **EP 3 842 655 B1**
(45) Date of publication and mention of the grant of the patent: **15.03.2023**
(21) Application number: 20216584.1
(22) Date of filing: 22.12.2020
(51) Int. Cl.: F16D 65/00, F16D 65/18, F16D 55/00

(54) **A CALIPER FOR A DISC BRAKE AND DISC BRAKE**
EIN BREMSSATTEL FÜR EINE SCHEIBENBREMSE UND EINE SCHEIBENBREMSE
UN ÉTRIER POUR UN FREIN À DISQUE ET UN FREIN À DISQUE

(30) Priority: 23.12.2019 IT 201900025282
(43) Date of publication of application: 30.06.2021
(73) Proprietor: BREMBO S.p.A., 24035 Curno (BERGAMO) (IT)
(72) Inventor: LIGARI, Lucrezia, 24035 Curno (BERGAMO) (IT); TERRUZZI, Andrea, 24035 Curno (BERGAMO) (IT)
(74) Representative: Leihkauf, Steffen Falk

(56) References cited:
- JP-A- S63 318 328
- JP-A- 2006 071 042
- US-A1- 2006 049 006
- US-A1- 2007 284 856

## Description

The present invention relates to a caliper body for a disc brake, as well as to a disc brake, particularly for motor vehicles.

Disc brakes with a fixed caliper are known, in which the caliper body comprises two walls arranged on both sides of the brake disc and connected to each other by means of two or more connecting bridges which extend straddling the disc. Typically, the two walls are connected to each other by means of connecting screws received inside the connecting bridges. The wall of the caliper body facing the inside of the vehicle comprises two holes for accommodating the respective fastening screws for rotationally integrally and translationally integrally fastening the caliper body to the vehicle. In both walls of the caliper body, a seat is obtained for accommodating a pad carrying a friction material coating facing the brake disc, and at least one of the walls delimits one or more seats for hydraulic cylinder-piston assemblies or for electrically operated pistons adapted to tighten the pads against the brake disc to generate the braking force.

Disc brakes with a floating caliper are also known comprising a support bracket which may be connected to the vehicle suspension, a caliper body slidingly mounted on the support bracket and forming a first wall arranged on a first side of the brake disc and a second wall arranged on a second side of the brake disc opposite to the first side, one or more first and second friction pads supported by the support bracket and/or by the caliper body, respectively on the first and second sides of the brake disc, and one or more actuation pistons supported by the caliper body on the first side of the brake disc only and operable to bias the first friction pads in the direction of the second side against the brake disc.

The brake disc is usually connected to the wheel hub on an inner side of the wheel and, consequently, the brake caliper is mounted at a cavity of the rim facing the inside of the vehicle.

While driving on a snow-covered surface, snow and ice are lifted from the surface and are deposited, due to the centrifugal effect of the wheel, right inside the cavity itself of the rim, in which the brake caliper is also located.

In particular, a sediment of snow and ice is formed on the intrados of the rim of the wheel, forming an increasingly thick and compact layer, mainly in the rear wheels of the vehicle. The contour of the brake caliper scrapes the layer of snow from the intrados of the rim. The scraped snow and the snow, freely whirling, are deposited at the inlet of the caliper where they form, under the effect of the occasional braking heat, a body of solid ice or compacted snow which blocks the tightening movement of the friction pads.

At the rear axle, such an ice body is formed at the inlet side of the pads (front side with reference to a relative advancement direction of the caliper body with respect to the wheel or brake disc) and forms, under the influence of engine and braking heat, an unwanted source of water for the corresponding friction surfaces.

The snow accumulated in the cavity of the wheel may enter the caliper body in the region of the friction pads and block the friction pads or interfere with the planned operation thereof, causing a loss of braking power.

The snow accumulated in the cavity of the wheel may also impact and accumulate in the region of the caliper body in which a rigid duct extends, carrying the hydraulic fluid from the inner wall of the caliper body to the outer wall thereof, and may interfere with the normal operation of the brake, causing a loss of braking power and/or damage to the pressurized fluid distribution system. US 2006/049006 A1 describes a closest state of the art disc brake for the present invention.

Therefore, it is the object of the present invention to provide a caliper body for a disc brake, for example, with a fixed or floating caliper, having features such as to at least partially obviate the drawbacks mentioned with reference to the prior art.

It is a further object of the invention to provide a caliper body for a disc brake, for example, with a fixed or floating caliper, having features such as to protect the friction pads and the pins which support the friction pads from the snow, to prevent snow and ice from blocking the friction pads.

It is a further object of the invention to provide a caliper body for a disc brake, for example, with a fixed or floating caliper, having features such as to protect the rigid duct carrying the hydraulic fluid from the inner wall of the caliper body to the outer wall thereof from snow and ice.

These and other objects are achieved by a caliper for a disc brake, e.g., with a fixed or floating caliper, comprising:
- two side walls spaced apart from each other, which delimit a disc space to accommodate a portion of a brake disc,
- means for fastening the caliper to a vehicle,
- a connecting structure which extends straddling the disc space and connects the side walls to each other,
- at least one pad seat formed in each of said side walls and adapted to accommodate at least one friction pad,
- thrust means secured to one or both of the side walls and adapted to bias the pads in the disc space against the brake disc to tighten it,
   in which the caliper has an inlet side (leading side) on which the rotating brake disc enters into the disc space, and an outlet side (trailing side) on which the rotating brake disc exits from the disc space,
   in which the caliper comprises a snowplow structure firmly connected to the connecting structure on at least one of the inlet and outlet sides and having:
- a free transverse edge, protruding from the connecting structure towards the outside of the caliper and extending transversely to a plane of the brake disc and facing away from the caliper, in a direction substantially tangent with respect to the rotation axis of the brake disc,
- two guide edges which extend from two opposite side end portions of the transverse edge converging towards each other so as to form together a cusp-shaped guide,
- a protection plate (40) protruding from the connecting structure (9) towards the outside of the caliper (1) and extending transversely to the plane (22) of the brake disc (5), so as to cover a hydraulic duct (17) of the caliper (1) on a radially outer side thereof.

By virtue of the snowplow structure thus configured, the snow present in the intrados of the rim is captured and deflected away from the caliper, in particular, away from the area of the friction pads.

In order to better understand the invention and appreciate the advantages thereof, a description of exemplary and non-limiting embodiments is provided below, with reference to the Figures, in which:
Figures 1A and 1B are side views of a caliper for a disc brake according to an embodiment of the invention,
Figure 2 is a perspective view of the caliper of Figures 1A and 1B,
Figure 3A is a view from an outlet side of a brake with the caliper in Figures 1A and 1B,
Figure 3B is a view from an inlet side of a brake with the caliper in Figures 1A and 1B,
Figure 4A is a bottom view of the brake with the caliper in Figures 1A and 1B,
Figure 4B is a top view of the brake with the caliper in Figures 1A and 1B,
Figure 5 is a partial view of a disc brake according to an embodiment,
Figure 6 is a sectional view of the disc brake in Figure 5, in which the disc is removed for greater clarity,
Figure 7 is a partial side view of a caliper for a disc brake according to a further embodiment of the invention,
Figure 8 is a partial perspective view of a disc brake according to a further embodiment,
Figure 9 is a top view of a caliper for a disc brake according to a further embodiment.

### Caliper for disc brake

With reference to the Figures, a caliper 1, for example, a fixed caliper, for a disc brake 2 comprises two side walls 3 spaced apart from each other, which delimit a disc space 4 to accommodate a portion of a brake disc 5. One of the two side walls 3 comprises means for rotationally and translationally fastening the caliper 1 to a vehicle (not shown), in particular, to the suspension 6 of the vehicle, in an integral manner.

For example, these fastening means comprise at least two holes 7 formed in one of the side walls 3. The holes 7 are spaced apart from each other and are adapted to receive respective fastening screws 8.

The side walls 3 are connected to each other by a connecting structure 9 which extends straddling the disc space 4 and each of the side walls 3 delimits at least one pad seat 10 to accommodate a friction pad 11.

The caliper 1 further comprises thrust means, for example, one or more hydraulic cylinder-piston assemblies 12, located in suitable actuation seats 13 formed in the side walls 3 and adapted to bias the friction pads 11 towards the inside of the disc space 4 against the brake disc 5 to tighten it.

The thrust means, in particular, the hydraulic cylinder-piston assemblies 12 or, alternatively, electromechanically operated pistons, are secured to the side walls 2 so that the latter counteract the whole tightening force, and the aforesaid pad seats 10 are arranged to secure the friction pads 11 so that the side walls 3 also counteract the whole braking force or tangential force transmitted by the friction pads 11 by means of the friction at the brake disc 5.

The connecting structure 9 may comprise one or more bridge elements 14, 15, for example, shells or blocks in the shape of an arch or arranged along an arch, integrally connected, preferably in one piece, with both side walls 3 along a circumferential outer edge thereof.

Within the present description of the embodiments of the invention, the indications for direction and position "circumferential", "axial" and "radial" refer to the rotation axis of the brake disc 5. Said disk rotation axis is oriented transversely, generally substantially perpendicular with respect to the planes in which the side walls 3 lie.

The bridge elements 14, 15 may comprise, for example, two outer bridge elements 14, formed at two opposite circumferential ends of the caliper 1, and a central bridge element formed in a circumferentially central portion of the caliper 1.

The bridge elements 14, 15 may delimit (therebetween) one or more through openings 16.

The connecting structure 9, i.e., the bridge elements 14, 15 are advantageously formed in one piece with the side walls 3, for example by means of casting.

The caliper 1 may also comprise a hydraulic duct 17, usually a rigid metal tube, extending at one of the inlet 18 and outlet 19 sides or ends, or at one of the two outer bridge elements 14, for a hydraulic connection of the hydraulic cylinder-piston assemblies 12 in the two opposite side walls 3.

The caliper 1 has an inlet side (leading side) 18 on which the rotating brake disc 5 enters into the disc space 4, and an outlet side (trailing side) 19 on which the rotating brake disc 5 exits from the disc space 4.

In some embodiments, the hydraulic duct 17 is positioned on the outlet side 19 of the caliper 1 to avoid damage due to the impact of pebbles or other objects dragged by the vehicle wheel and projected against the caliper 1.

According to an aspect of the invention, the caliper 1 comprises a snowplow structure 20 firmly connected to the connecting structure 9 on at least one of the inlet 18 and outlet 19 sides and having:
- a free transverse edge 21, protruding from the connecting structure 9 towards the outside of the caliper 1 and extending transversely to a plane 22 of the brake disc 5 and facing away from the caliper 1, in a direction substantially tangent with respect to the rotation axis 23 of the brake disc 5,
- two guide edges 24 which extend from two opposite side end portions 25 of the transverse edge 21 converging towards each other so as to form together a cusp-shaped guide.

By virtue of the snowplow structure 20 thus configured, the snow present in the intrados of the rim 26 is captured or detached in a systematic and controlled manner from the rim 26, and deflected away from the caliper 1 or away from the area of the friction pads 11.

This prevents or reduces the sediment of snow at the inlet of the caliper and hinders the formation of the snow or ice body which may block the tightening movement of the friction pads 11.

Furthermore, the reduction of the snow accumulation in the caliper 1 reduces the undesirable lubricating effect due to the melted ice on the pads and to the presence of ice at the outer hydraulic duct 17.

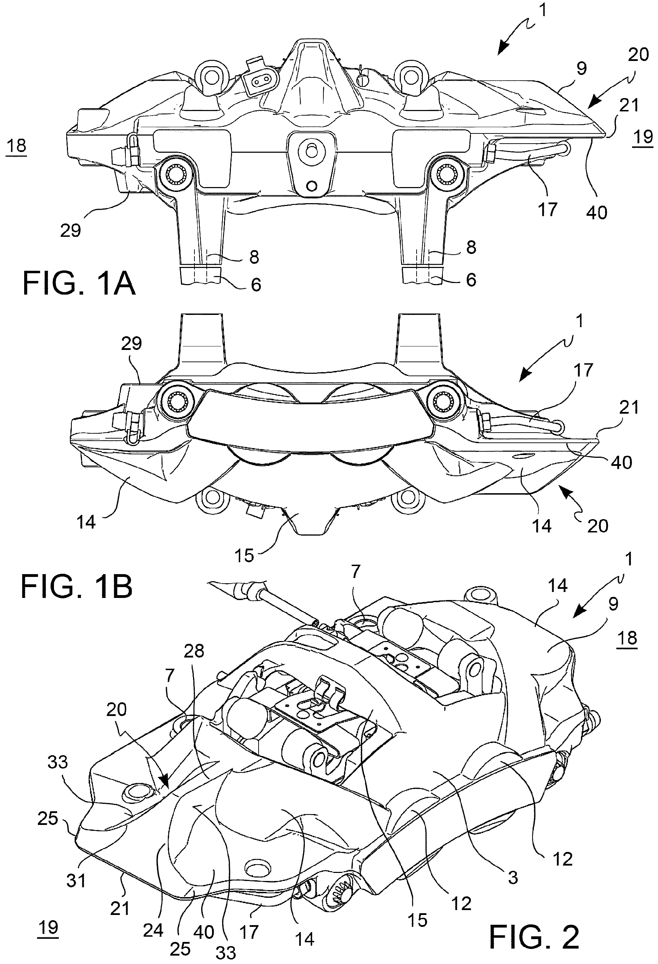

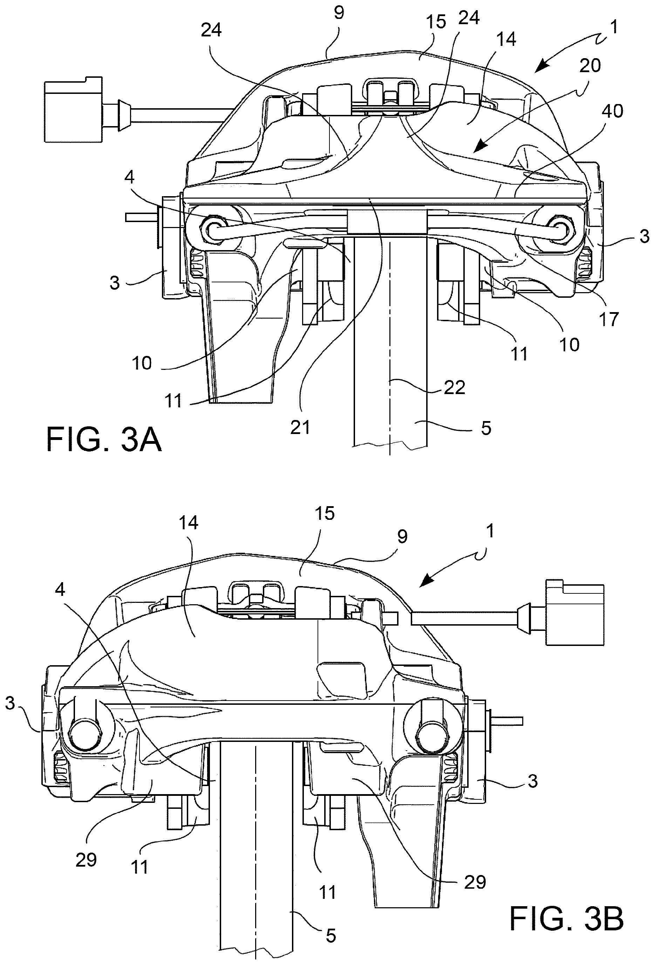

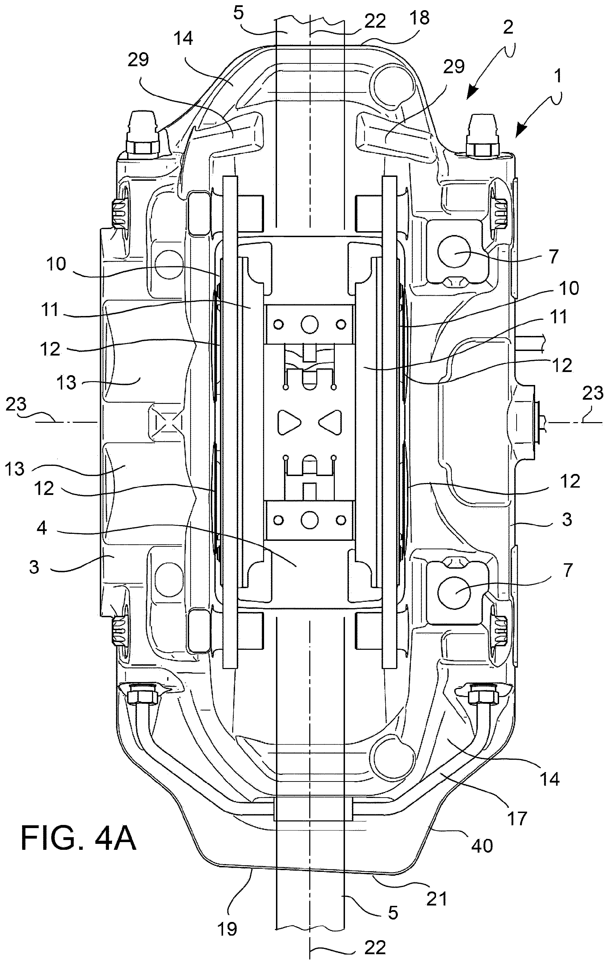

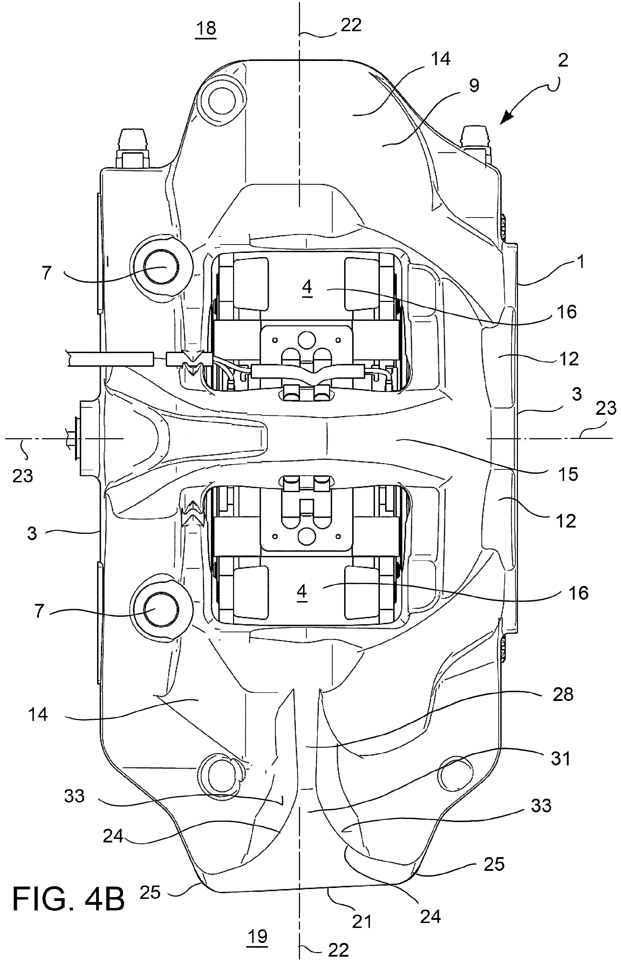

According to an embodiment (Figures 1 - 6), the snowplow structure 20 is formed in one piece with the connecting structure 9, preferably in one piece with the entire body of the caliper 1, for example by means of casting.

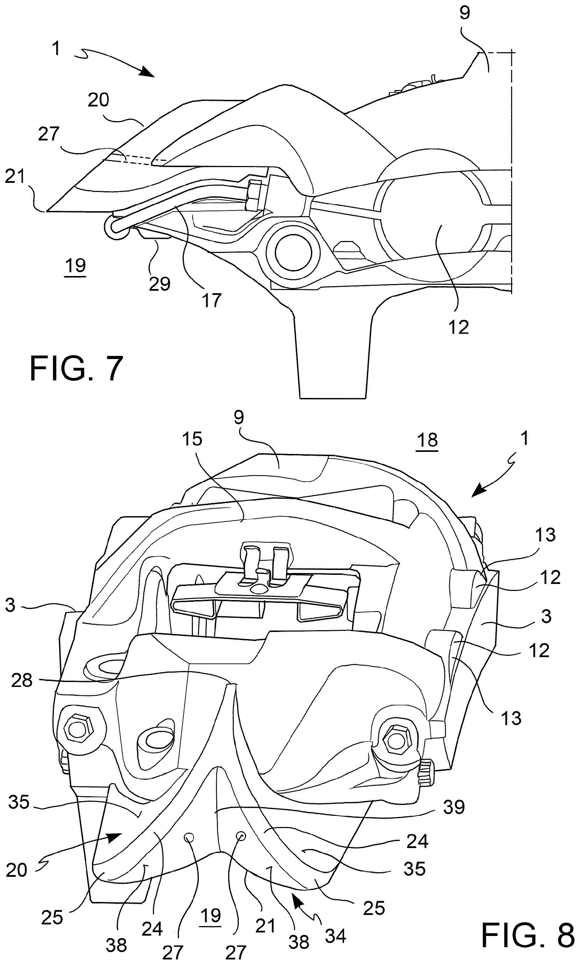

Alternatively (Figures 7, 8), the snowplow structure 20 is manufactured separately from the body of the caliper 1 and then connected to the connecting structure 9, for example, by means of screws 27.

According to an embodiment, the snowplow structure 20 is positioned on the outlet side (trailing end) 19 of the caliper 1 and a cusp tip 28 of the cusp-shaped guide faces the inlet side (leading end) 18 of the caliper 1, i.e., in the opposite direction with respect to the rotation direction of the wheel 26 with the brake disc 5.

Thereby, the cusp tip 28 of the cusp-shaped guide may penetrate centrally into the layer of snow accumulated on the rim intrados 26 and break and detach the snow, as well as laterally deflect the detached snow away from the caliper 1. This detachment with lateral deflection of the snow obviates the issue of the prior art in which the calipers scraped the snow from the rim, attracting the scraped snow right towards the inside of the caliper itself.

Additionally or alternatively, the or a similar snowplow structure 20 is positioned (exclusively or also) on the inlet side (leading end) 18 of the caliper 1 and the cusp tip 28 of the cusp-shaped guide faces the outlet side (trailing end) 19 of the caliper 1, i.e., in the same direction as the rotation direction of the wheel 26 with the brake disc 5.

Thereby, the free transverse edge 21 forms a barrier against the entry of snow and ice on the inlet side 18 of the caliper 1 and deflects the snow which is on the inlet side 18 of the caliper 1 in the radially outer direction. Also in this case, the two converging guide edges 24 help dividing the snow "flow" into two partial flows which may be dispersed on the two lateral sides of the caliper 1 without entering the caliper 1 itself.

In a particularly advantageous embodiment, in addition to the snowplow structure 20, the caliper 1 further comprises at least one, preferably two opposite snow-guard walls 29, positioned in an end region of the caliper 1 between the pad seats 10 and the inlet end 18 and protruding from inner surfaces of the side walls 3 into the disc space 4, so as to reduce in this end region the free axial distance between the brake disc 5 and the side wall 3 and, therefore, hinder the entry of snow or ice into the pad seat 10.

In particular, the two opposite snow-guard walls 29 are interposed between the inlet side or the inlet end 18 of the caliper 1 and pad support pins 42 which protrude from the side walls 3 and slidingly support the friction pads 11. Thereby, the snow-guard walls 29 hinder or prevent the access and the accumulation of snow at the support pins 42 where the accumulation of snow and ice may block the planned movement of the friction pads 11 during the braking action.

According to an embodiment, the snow-guard wall(s) 29 have an axial distance from (the friction surface of) the brake disc 5 of less than 3mm, preferably less than 2mm, advantageously in the range from 1.5mm and 1.8mm.

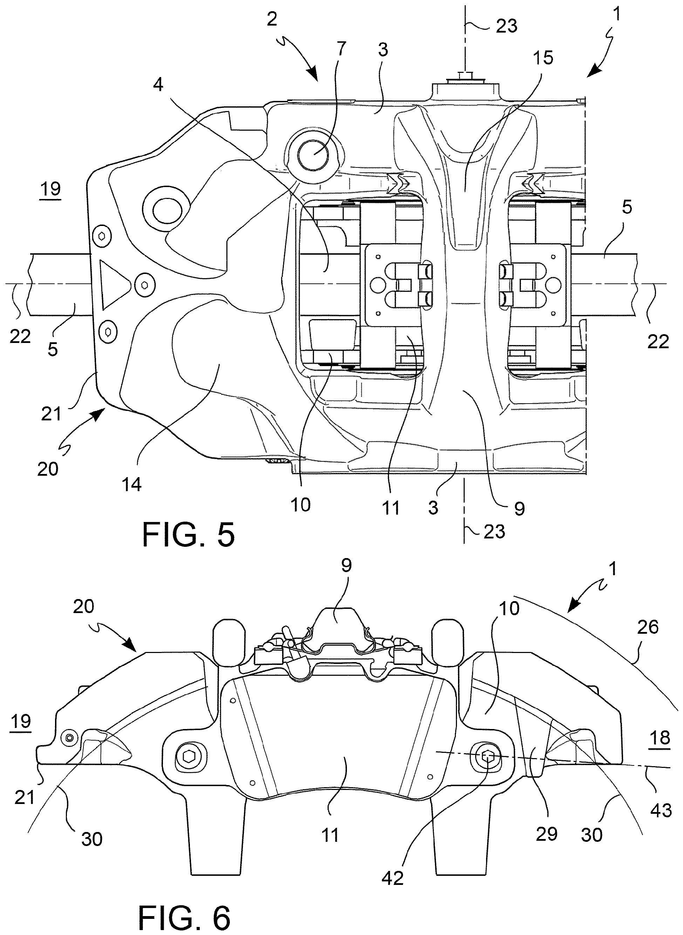

According to an embodiment (Figure 6) the snow-guard wall(s) 29 extend from a radially inner surface of the connecting structure 9, preferably of the outer bridge element 14 away from the connecting structure 9 and, preferably, beyond a hypothetical plane 43 defined by an axis of the support pin 42 (on the inlet side) and the inlet end 18 of the caliper 1.

Thereby, the pad support pin 42 is protected from the flow of swirling snow at the inlet side 18 of the caliper 1.

According to a preferred embodiment, the radial distance between the snowplow structure 20 and an intrados of the outer ring of the rim 26 is in the range from 5 mm to 7 mm.

In a preferred embodiment, the snowplow structure 20 is formed on the outlet side 19 of the caliper 1 and the snow-guard wall 29 is formed on the inlet side 18 of the caliper.

Alternatively, the snowplow structure 20 is formed on the inlet side 18 of the caliper 1 and the snow-guard wall 29 is formed on the outlet side 19 of the caliper.

According to an embodiment (Figures 2, 5) the snowplow structure 20 forms a wedge 31 with a radially outer surface 32 and two opposite side surfaces 33, facing away from each other, and diverging from each other from an apical conjunction line 34 which forms a snow-cutting blade, towards a base of the wedge 31 at the transverse edge 21.

The snow-cutting blade may be blunt or flattened, i.e., not sharp, for example, to facilitate the manufacturing by casting and to strengthen it. Alternatively, the snow-cutting blade may be sharp or form a sharp edge.

In this embodiment, the side surfaces 33 intersect with the radially outer surface 32 at the converging guide edges 24.

Advantageously, the side surfaces 33 are curved and concave.

According to a further embodiment (Figure 8), the snowplow structure 20 forms a bifurcated protrusion 34, two opposite outer side surfaces 35, facing away from each other, and diverging from each other from an apical conjunction line 36 forming a snow-cutting blade (preferably not sharp), towards two free ends or tips 37 spaced apart from each other transversely to the disc plane 22, as well as two opposite inner side surfaces 38, facing each other, and diverging from each other from a central conjunction cavity 39 towards the two free ends or tips 37.

In this embodiment, the outer side surfaces 35 meet with the respective inner side surfaces 38 at the converging guide edges 24.

Advantageously, the outer side surfaces 35 are curved and concave, while the inner side surfaces 38 are curved and convex.

Similarly, the guide edges 24 are preferably curved.

This reduces the braking torque which is inevitably generated by the scraping and the deflection of the snow.

According to embodiments, the free transverse edge 21 may be straight or curved, for example concave or convex.

The caliper 2 forms a protection plate 40, preferably substantially planar, protruding from the connecting structure 9 towards the outside of the caliper 1 and extending transversely or perpendicular to the plane 22 of the brake disc 5, so as to cover the hydraulic duct 17 on a radially outer side thereof. Thereby, the protection plate 40 forms a screen interposed between the hydraulic duct 17 and the intrados of the rim 26 of the wheel along which the compacted layer of snow is formed.

Advantageously, the protection plate 40 forms a base of the snowplow structure 20 and the free transverse edge 21 of the snowplow structure 20 is formed by a free end of the protection plate 40.

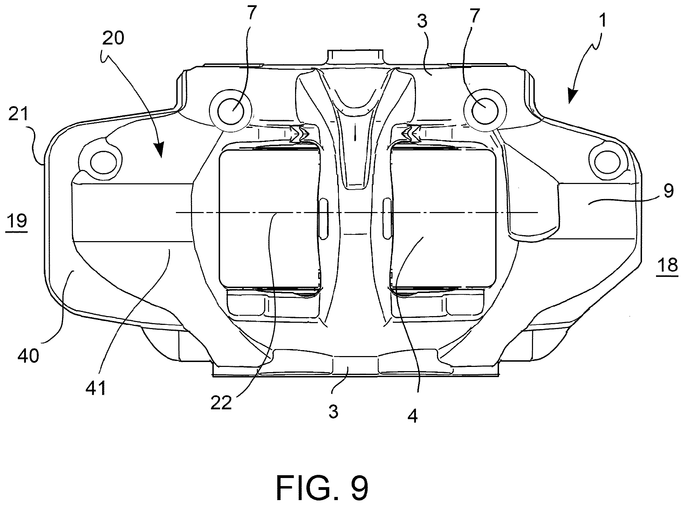

Figure 9 shows a further embodiment of the caliper 1, in which:
- the free transverse edge 21 is formed by a substantially planar plate 40, protruding from the connecting structure 9 towards the outside of the caliper 1 and extending transversely or perpendicular to the plane 22 of the brake disc 5,
- the two guide edges 24 are replaced with a convex guide surface 41 which protrudes from a radially outer surface of the plate 40, so as to form together a dome-shaped guide on a planar base.

Also in this embodiment, the plate 40 covers the hydraulic duct 17 on a radially outer side thereof, to protect it from the impact of snow, ice, and pebbles and to shield it from the layer of snow formed along the intrados of the rim 26.

The invention also relates to the brake disc 2 with the caliper 1 described heretofore.

Obviously, those skilled in the art, in order to meet contingent and specific needs, may make further changes and variants to the caliper 1 according to the present invention, all without departing from the scope of protection of the invention, as defined by the following claims.

## Claims

1. A caliper (1) for a disc brake (2), comprising:
- two side walls (3) spaced apart from each other, which delimit a disc space (4) to accommodate a portion of a brake disc (5),
- means for fastening the caliper (1) to a vehicle,
- a connecting structure (9) which extends straddling the disc space (4) and connects the side walls (3) to each other,
- at least one pad seat (10) formed in each of said side walls (3) and adapted to accommodate at least one friction pad (11),
- thrust means (12) secured to one or both of the side walls (3) and adapted to bias the friction pads (11) against the brake disc (5) to tighten it,
wherein the caliper (1) has an inlet side (18) on which the rotating brake disc (5) enters into the disc space (4), and an outlet side on which the rotating brake disc (5) exits from the disc space (4),
wherein the caliper (1) comprises a snowplow structure (20) firmly connected to the connecting structure (9) on at least one of the inlet (18) and outlet (19) sides and having:
- a free transverse edge (21), protruding from the connecting structure (9) towards the outside of the caliper (1) and extending transversely to a plane (22) of the brake disc (5) and facing away from the caliper (1),
- two guide edges (24) which extend from two opposite side end portions (25) of the transverse edge (21) converging towards each other so as to form together a cusp-shaped guide,
**characterized by** comprising a protection plate (40) protruding from the connecting structure (9) towards the outside of the caliper (1) and extending transversely to the plane (22) of the brake disc (5), so as to cover a hydraulic duct (17) of the caliper (1) on a radially outer side thereof..

2. A caliper (1) according to claim 1, wherein the snowplow structure (20) is formed in a single piece with the connecting structure (9), wherein the snowplow structure (20) is formed by casting in a single piece with the caliper (1).

3. A caliper (1) according to claim 1, wherein the snowplow structure (20) is manufactured separately from a body of the caliper (1) and then connected or screwed to the connecting structure (9).

4. A caliper (1) according to any one of the preceding claims, wherein the snowplow structure (20) is positioned on the outlet side (19) of the caliper (1) and a cusp tip (28) of the cusp-shaped guide faces towards the inlet side (18) of the caliper (1).

5. A caliper (1) according to any one of the preceding claims, wherein the snowplow structure (20) is positioned on the inlet side (18) of the caliper (1) and a cusp tip (28) of the cusp-shaped guide faces towards the outlet side (19) of the caliper (1).

6. A caliper (1) according to any one of the preceding claims, further comprising at least one or two opposite snow-guard walls (29), positioned in an end region of the caliper (1) between the pad seats (10) and one of the inlet (18) and outlet (19) ends and protruding from the inner surface(s) of the side wall(s) (3) in the disc space (4), so as to reduce a free axial distance between the brake disc (5) and the side wall (3) in this end region.

7. A caliper (1) according to claim 6, wherein the two opposite snow-guard walls (29) are interposed between the inlet end (18) of the caliper (1) and pad support pins (42) which protrude from the side walls (3) and slidingly support the friction pads (11).

8. A caliper (1) according to claim 6 or 7, wherein the snow-guard wall(s) (29) have an axial distance from the brake disc (5) of less than 3 mm or less than 2 mm or in the range from 1.5 mm to 1.8 mm.

9. A caliper (1) according to one of claims 6 to 8, wherein the snow-guard wall(s) (29) extend from a radially inner surface of the connecting structure (9) away from the connecting structure (9) beyond a hypothetical plane (43) defined by an axis of the pad support pin (42) on the inlet side (18) and the inlet end (18) of the caliper (1).

10. A caliper (1) according to any one of the preceding claims, wherein a radial distance between the snowplow structure (20) and an intrados of the outer ring of the rim (26) is in the range from 5 mm to 7 mm.

11. A caliper (1) according to any one of the preceding claims, wherein the snowplow structure (20) is formed on the outlet side (19) of the caliper (1) and the snow-guard wall (29) is formed on the inlet side (18) of the caliper (1).

12. A caliper (1) according to any one of the preceding claims, wherein the snowplow structure (20) forms a wedge (31) with a radially outer surface (32) and two opposite side surfaces (33), facing away from each other, extending divergently from each other from an apical conjunction line (34) which forms a snow-cutting blade, towards a base of the wedge (31) at the transverse edge (21),
wherein the side surfaces (33) intersect with the radially outer surface (32) at the converging guide edges (24).

13. A caliper (1) according to claim 12, wherein the side surfaces (33) are curved and concave.

14. A caliper (1) according to any one of the preceding claims, wherein the snowplow structure (20) forms a bifurcated protrusion (34) with:
- two opposite outer side surfaces (35), facing away from each other, and extending divergently from an apical conjunction line (36) which forms a snow-cutting blade, towards two tips (37) spaced apart from each other,
- two opposite inner side surfaces (38), facing each other, and extending divergently from a central conjunction cavity (39) towards the two tips (37),
wherein the outer side surface (35) and the inner side surface (38) of each of the two tips (37) meet at the converging guide edges (24).

15. A caliper (1) according to claim 14, wherein the outer side surfaces (35) are curved and concave, while the inner side surfaces (38) are curved and convex.

16. A caliper (1) according to any one of the preceding claims, wherein the protection plate (40) forms a base of the snowplow structure (20) and the transverse edge (21) consists of a free end of the protection plate (40).

17. A caliper (1) according to claim 1, wherein:
- the free transverse edge (21) is formed by a substantially planar plate (40), protruding from the connecting structure (9) towards the outside of the caliper (1) and perpendicular to the plane (22) of the brake disc (5),
- the two guide edges (24) are replaced with a convex guide surface (41) which protrudes from a radially outer surface of the plate (40), so as to form together a dome-shaped guide on a planar base.

18. A disc brake (2) comprising a caliper (1) according to any one of the preceding claims.

## Patentansprüche

1. Sattel (1) für eine Scheibenbremse (2), umfassend:
- zwei Seitenwände (3), welche voneinander beabstandet sind, welche einen Scheibenraum (4) zum Aufnehmen eines Abschnitts einer Bremsscheibe (5) begrenzen,
- Mittel zum Befestigen des Sattels (1) an einem Fahrzeug,
- eine Verbindungsstruktur (9), welche sich den Scheibenraum (4) überspannend erstreckt und die Seitenwände (3) miteinander verbindet,
- wenigstens einen Belagsitz (10), welcher in jeder der Seitenwände (3) gebildet und dazu eingerichtet ist, wenigstens einen Reibbelag (11) aufzunehmen,
- Schubmittel (12), welche an eine oder beide der Seitenwände (3) gesichert und dazu eingerichtet sind, die Reibbeläge (11) gegen die Bremsscheibe (5) vorzubelasten, um sie anzuziehen,
wobei der Sattel (1) eine Einlass-Seite (18), an welcher die rotierende Bremsscheibe (5) in den Scheibenraum (4) eintritt, und eine Auslass-Seite umfasst, an welcher die rotierende Bremsscheibe (5) aus dem Scheibenraum (4) austritt,
wobei der Sattel (1) eine Schneepflug-Struktur (20) umfasst, welche fest mit der Verbindungsstruktur (9) an wenigstens einer aus den Einlass- (18) und Auslass-(19) Seiten verbunden ist und aufweist:
- einen freien transversalen Rand (21), welcher von der Verbindungsstruktur (9) in Richtung der Außenseite des Sattels (1) vorsteht und sich transversal zu einer Ebene (22) der Bremsscheibe (5) erstreckt und von dem Sattel (1) weg weisend erstreckt,
- zwei Führungsränder (24), welche sich von zwei gegenüberliegenden Seiten-Endabschnitten (25) des transversalen Rands (21) erstrecken, welche aufeinander zu konvergieren, um so zusammen eine scheitelförmige Führung zu bilden,
**dadurch gekennzeichnet, dass** er eine Schutzplatte (40) umfasst, welche von der Verbindungsstruktur (9) in Richtung der Außenseite des Sattels (1) vorsteht und sich transversal zu der Ebene (22) der Bremsscheibe (5) erstreckt, um so eine Hydraulikleitung (17) des Sattels (1) an einer radial äußeren Seite davon zu bedecken.

2. Sattel (1) nach Anspruch 1, wobei die Schneepflug-Struktur (20) in einem einzelnen Stück mit der Verbindungsstruktur (9) gebildet ist, wobei die Schneepflug-Struktur (20) durch Gießen in einem einzelnen Stück mit dem Sattel (1) gebildet ist.

3. Sattel (1) nach Anspruch 1, wobei die Schneepflug-Struktur (20) separat von einem Körper des Sattels (1) hergestellt und dann mit der Verbindungsstruktur verbunden oder verschraubt ist.

4. Sattel (1) nach einem der vorhergehenden Ansprüche, wobei die Schneepflug-Struktur (20) an der Auslass-Seite (19) des Sattels (1) positioniert ist und eine Scheitelspitze (28) der scheitelförmigen Führung in Richtung der Einlass-Seite (18) des Sattels (1) weist.

5. Sattel (1) nach einem der vorhergehenden Ansprüche, wobei die Schneepflug-Struktur (20) an der Einlass-Seite (18) des Sattels (1) positioniert ist und eine Scheitelspitze (28) der scheitelförmigen Führung in Richtung der Auslass-Seite (19) des Sattels (1) weist.

6. Sattel (1) nach einem der vorhergehenden Ansprüche, ferner umfassend wenigstens eine oder zwei gegenüberliegende Schneeschutz-Wände (29), welche in einem Endbereich des Sattels (1) zwischen den Belagsitzen (10) und einem aus den Einlass- (18) und Auslass- (19) Enden positioniert sind und von der/den innere(n) Fläche(n) der Seitenwand/Seitenwände (3) in den Scheibenraum (4) vorstehen, um so eine freie axiale Distanz zwischen der Bremsscheibe (5) und der Seitenwand (3) in diesem Endbereich zu reduzieren.

7. Sattel (1) nach Anspruch 6, wobei die beiden gegenüberliegenden Schneeschutz-Wände (29) zwischen dem Einlassende (18) des Sattels (1) und Belag-Tragestiften (42) eingefügt sind, welche von den Seitenwänden (3) vorstehen und gleitend die Reibbeläge (11) tragen.

8. Sattel (1) nach Anspruch 6 oder 7, wobei die Schneeschutz-Wand/Wände (29) eine axiale Distanz von der Bremsscheibe (5) von weniger als 3 mm oder weniger als 2 mm oder in dem Bereich von 1,5 mm bis 1,8 mm aufweisen.

9. Sattel (1) nach einem der Ansprüche 6 bis 8, wobei sich die Schneeschutz-Wand/Wände (29) von einer radial inneren Fläche der Verbindungsstruktur (9) weg von der Verbindungsstruktur (9) über eine hypothetische Ebene (43) hinaus erstrecken, welche durch eine Achse des Belag-Tragestifts (42) an der Einlass-Seite (18) und dem Einlass-Ende (18) des Sattels (1) definiert ist.

10. Sattel (1) nach einem der vorhergehenden Ansprüche, wobei eine radiale Distanz zwischen der Schneepflug-Struktur (20) und einer Laibung des äußeren Rings der Felge (26) in dem Bereich von 5 mm bis 7 mm beträgt.

11. Sattel (1) nach einem der vorhergehenden Ansprüche, wobei die Schneepflug-Struktur (20) an der Auslass-Seite (19) des Sattels (1) gebildet ist und die Schneeschutz-Wand (29) an der Einlass-Seite (18) des Sattels (1) gebildet ist.

12. Sattel (1) nach einem der vorhergehenden Ansprüche, wobei die Schneepflug-Struktur (20) einen Keil (31) mit einer radial äußeren Fläche (32) und zwei gegenüberliegenden Seitenflächen (33) bildet, welche voneinander weg weisen, sich divergierend voneinander von einer apikalen Verknüpfungslinie (34), welche eine schneeschneidende Klinge bildet, in Richtung einer Basis des Keils (31) an dem transversalen Rand (21) erstreckend,
wobei die Seitenflächen (33) die radial äußere Fläche (32) an den konvergierenden Führungsrändern (24) schneiden.

13. Sattel (1) nach Anspruch 12, wobei die Seitenflächen (33) gekrümmt und konkav sind.

14. Sattel (1) nach einem der vorhergehenden Ansprüche, wobei die Schneepflug-Struktur (20) einen gabelförmigen Vorsprung (34) bildet, mit:
- zwei gegenüberliegenden äußeren Seitenflächen (35), welche voneinander weg weisen und sich divergierend von einer apikalen Verknüpfungslinie (36), welche eine schneeschneidende Klinge bildet, in Richtung von zwei Spitzen (37) erstrecken, welche voneinander beabstandet sind,
- zwei gegenüberliegenden inneren Seitenflächen (38), welche zueinander weisen und sich divergierend von einem zentralen Verknüpfungshohlraum (39) in Richtung der beiden Spitzen (37) erstrecken,
wobei sich die äußere Seitenfläche (35) und die innere Seitenfläche (38) von jeder der beiden Spitzen (37) an den konvergierenden Führungsrändern (24) treffen.

15. Sattel (1) nach Anspruch 14, wobei die äußeren Seitenflächen (35) gekrümmt und konkav sind, während die inneren Seitenflächen (38) gekrümmt und konvex sind.

16. Sattel (1) nach einem der vorhergehenden Ansprüche, wobei die Schutzplatte (40) eine Basis der Schneepflug-Struktur (20) bildet und der transversale Rand (21) aus einem freien Ende der Schutzplatte (40) besteht.

17. Sattel (1) nach Anspruch 1, wobei:
- der freie transversale Rand (21) durch eine im Wesentlichen planare Platte (40) gebildet ist, welche von der Verbindungsstruktur (9) in Richtung der Außenseite des Sattels (1) und senkrecht zu der Ebene (22) der Bremsscheibe (5) vorsteht,
- die beiden Führungsränder (24) durch eine konvexe Führungsfläche (41) ersetzt sind, welche von einer radial äußeren Fläche der Platte (40) vorsteht, um so zusammen eine kuppelförmige Führung auf einer planaren Basis zu bilden.

18. Scheibenbremse (2), umfassend einen Sattel (1) nach einem der vorhergehenden Ansprüche.

## Revendications

1. Étrier (1) pour un frein à disque (2), comprenant :
- deux parois latérales (3) espacées l'une de l'autre, qui délimitent un espace de disque (4) pour loger une partie d'un disque de frein (5),
- un moyen de fixation de l'étrier (1) à un véhicule,
- une structure de liaison (9) qui s'étend en enjambant l'espace de disque (4) et relie les parois latérales (3) l'une à l'autre,
- au moins un siège de plaquette (10) formé dans chacune desdites parois latérales (3) et apte à loger au moins une plaquette de frein (11),
- un moyen de poussée (12) raccordé à l'une ou aux deux des parois latérales (3) et apte à solliciter les plaquettes (11) contre le disque de frein (5) pour le serrer,
dans lequel l'étrier (1) présente un côté d'entrée (18) sur lequel le disque de frein (5) rotatif entre dans l'espace de disque (4), et un côté de sortie sur lequel le disque de frein (5) rotatif sort de l'espace de disque (4),
dans lequel l'étrier (1) comprend une structure en chasse-neige (20) reliée fermement à la structure de liaison (9) sur au moins l'un du côté d'entrée (18) et du côté de sortie (19) et présentant :
- un bord transversal libre (21), saillant depuis la structure de liaison (9) vers l'extérieur de l'étrier (1) et s'étendant transversalement à un plan (22) du disque de frein (5) et faisant face à l'écart de l'étrier (1),
- deux bords de guidage (24) qui s'étendent depuis deux parties d'extrémité latérales (25) opposées du bord transversal (21) convergeant l'une vers l'autre de manière à former ensemble un guide en forme de cuspide,
**caractérisé en ce qu'**il comprend une plaque de protection (40) saillante depuis la structure de liaison (9) vers l'extérieur de l'étrier (1) et s'étendant transversalement au plan (22) du disque de frein (5), de manière à recouvrir un conduit hydraulique (17) de l'étrier (1) sur un côté radialement extérieur de celui-ci.

2. Étrier (1) selon la revendication 1, dans lequel la structure en chasse-neige (20) est formée d'un seul tenant avec la structure de liaison (9), dans lequel la structure en chasse-neige (20) est formée par coulage d'un seul tenant avec l'étrier (1).

3. Étrier (1) selon la revendication 1, dans lequel la structure en chasse-neige (20) est fabriquée séparément d'un corps de l'étrier (1) puis reliée ou vissée à la structure de liaison (9).

4. Étrier (1) selon l'une quelconque des revendications précédentes, dans lequel la structure en chasse-neige (20) est positionnée sur le côté de sortie (19) de l'étrier (1) et une pointe de cuspide (28) du guide en forme de cuspide fait face au côté d'entrée (18) de l'étrier (1).

5. Étrier (1) selon l'une quelconque des revendications précédentes, dans lequel la structure en chasse-neige (20) est positionnée sur le côté d'entrée (18) de l'étrier (1) et une pointe de cuspide (28) du guide en forme de cuspide fait face au côté de sortie (19) de l'étrier (1).

6. Étrier (1) selon l'une quelconque des revendications précédentes, comprenant en outre au moins une ou deux parois de garde-neige (29), positionnées dans une région d'extrémité de l'étrier (1) entre les sièges de plaquette (10) et l'une des extrémités d'entrée (18) et de sortie (19) et saillantes depuis la ou les surfaces intérieures de la ou des parois latérales (3) dans l'espace de disque (4), de manière à réduire une distance axiale libre entre le disque de frein (5) et la paroi latérale (3) dans cette région d'extrémité.

7. Étrier (1) selon la revendication 6, dans lequel les deux parois de garde-neige (29) opposées sont interposées entre l'extrémité d'entrée (18) de l'étrier (1) et les broches de support de plaquette (42) qui font saillie depuis les parois latérales (3) et supportent de manière coulissante les plaquettes de frein (11).

8. Étrier (1) selon la revendication 6 ou 7, dans lequel la ou les parois de garde-neige (29) ont une distance axiale depuis le disque de frein (5) de moins de 3 mm ou de moins de 2 mm ou dans la plage de 1,5 mm à 1,8 mm.

9. Étrier (1) selon l'une des revendications 6 à 8, dans lequel la ou les parois de garde-neige (29) s'étendent depuis une surface radialement intérieure de la structure de liaison (9) à l'écart de la structure de liaison (9) au-delà d'un plan hypothétique (43) défini par un axe de la broche de support de plaquette (42) sur le côté d'entrée (18) et l'extrémité d'entrée (18) de l'étrier (1).

10. Étrier (1) selon l'une quelconque des revendications précédentes, dans lequel une distance radiale entre la structure en chasse-neige (20) et un intrados de l'anneau extérieur de la jante (26) est dans la plage de 5 mm à 7 mm.

11. Étrier (1) selon l'une quelconque des revendications précédentes, dans lequel la structure en chasse-neige (20) est formée sur le côté de sortie (19) de l'étrier (1) et la paroi de garde-neige (29) est formée sur le côté d'entrée (18) de l'étrier (1).

12. Étrier (1) selon l'une quelconque des revendications précédentes, dans lequel la structure en chasse-neige (20) forme un coin (31) avec une surface radialement extérieure (32) et deux surfaces latérales (33) opposées, faisant face à l'écart l'une de l'autre, s'étendant de manière divergente l'une de l'autre depuis une ligne de conjonction apicale (34) qui forme une lame de coupe de neige, vers une base du coin (31) au niveau du bord transversal (21),
dans lequel les surfaces latérales (33) sont en intersection avec la surface radialement extérieure (32) au niveau des bords de guidage (24) convergents.

13. Étrier (1) selon la revendication 12, dans lequel les surfaces latérales (33) sont incurvées et concaves.

14. Étrier (1) selon l'une quelconque des revendications précédentes, dans lequel la structure en chasse-neige (20) forme une protubérance bifurquée (34) avec :
- deux surfaces latérales extérieures (35) opposées, faisant face à l'écart l'une à l'autre, et s'étendant de manière divergente depuis une ligne de conjonction apicale (36) qui forme une lame de coupe de neige, vers deux pointes (37) espacées l'une de l'autre,
- deux surfaces latérales intérieures (38) opposées, se faisant face l'une à l'autre, et s'étendant de manière divergente depuis une cavité de conjonction centrale (39) vers les deux pointes (37),
dans lequel la surface latérale extérieure (35) et la surface latérale intérieure (38) de chacune des deux pointes (37) se rejoignent au niveau des bords de guidage (24) convergents.

15. Étrier (1) selon la revendication 14, dans lequel les surfaces latérales extérieures (35) sont incurvées et concaves, alors que les surfaces latérales intérieures (38) sont incurvées et convexes.

16. Étrier (1) selon l'une quelconque des revendications précédentes, dans lequel la plaque de protection (40) forme une base de la structure en chasse-neige (20) et le bord transversal (21) est constitué d'une extrémité libre de la plaque de protection (40).

17. Étrier (1) selon la revendication 1, dans lequel :
- le bord transversal libre (21) est formé par une plaque sensiblement plane (40), saillante depuis la structure de liaison (9) vers l'extérieur de l'étrier (1) et perpendiculaire au plan (22) du disque de frein (5),
- les deux bords de guidage (24) sont remplacés par une surface de guidage (41) convexe saillante depuis une surface radialement extérieure de la plaque (40), de manière à former ensemble un guide en forme de dôme sur une base plane.

18. Frein à disque (2) comprenant un étrier (1) selon l'une quelconque des revendications précédentes.
